# EUROPEAN PATENT APPLICATION

(11) **EP 2 392 856 A2**
(43) Date of publication of application: **07.12.2011**
(21) Application number: 10736055.4
(22) Date of filing: 01.02.2010
(51) Int. Cl.: F23D 14/38, F23N 1/00, F23D 14/46, B23K 7/10

(54) **GAS REGULATING VALVE FOR TORCH**

(30) Priority: 01.02.2009 KR 20090007789; 18.03.2009 KR 20090022941; 14.08.2009 KR 20090075321; 14.11.2009 KR 20090110003; 01.02.2010 KR 20100008940
(71) Applicant: Bool Bool Co., Ltd., Siheung-si, Gyeonggi-do 429-825 (KR); Lee, Myung Hee, Siheung-si, Gyeonggi-do 429-825 (KR)
(72) Inventor: LEE, Myung Hee, Gyeonggi-do 429-825 (KR)
(74) Representative: Lenz, Steffen
(86) International application number: PCT/KR2010/000596
(87) International publication number: WO 2010/087664

(57) **Abstract**

The present invention relates to a gas regulating valve for a torch. A gas regulating valve for a torch of the present invention has a valve frame including a gas inlet with a substantially tapered cross-section and a gas outlet, a valve pin inserted into an insertion hole formed inside the valve frame to block and open the gas inlet, a handle fastened to a tail portion of the valve pin, and a valve frame fastening block that is immovably fastened on the outside of the valve frame, is formed in a ring shape along an outer periphery of the valve pin on the top of the handle and guides, by rotations of the handle, the valve pin to translate back and forth opposite to the gas inlet, and further comprises a buffer resin part with a conical shape fixed to the top of the head of the valve pin, wherein the buffer resin part has a cross-section corresponding to the tapered shape of the gas inlet, making a surface contact with the tapered surface of the gas inlet. Accordingly, as the contact face between the gas inlet and the valve is protected by the resin, the life of the gas regulating valve is increased and a gas leak between the gas inlet and the valve pin can be suppressed effectively, such that large scale explosion accidents or safety-related accidents as well as environmental contamination or environmental accidents due to a gas leak can be avoided in advance.

## Description

### Field of the Invention

This invention relates to a gas regulating valve for torch which is used for cutting, heating, melting and welding a substance of metal material and more particularly to a gas regulating valve for torch regulating and opening and closing gas and oxygen flow.

### Background Art

Generally, torches are used for cutting, heating, melting, and welding work of metal material. For this operation, the gas regulating valve equipped in the torch was used to regulate gas and oxygen. Occasionally, some gas spilling and leaking problems are found when the gas regulating valve is opened and closed too frequently.

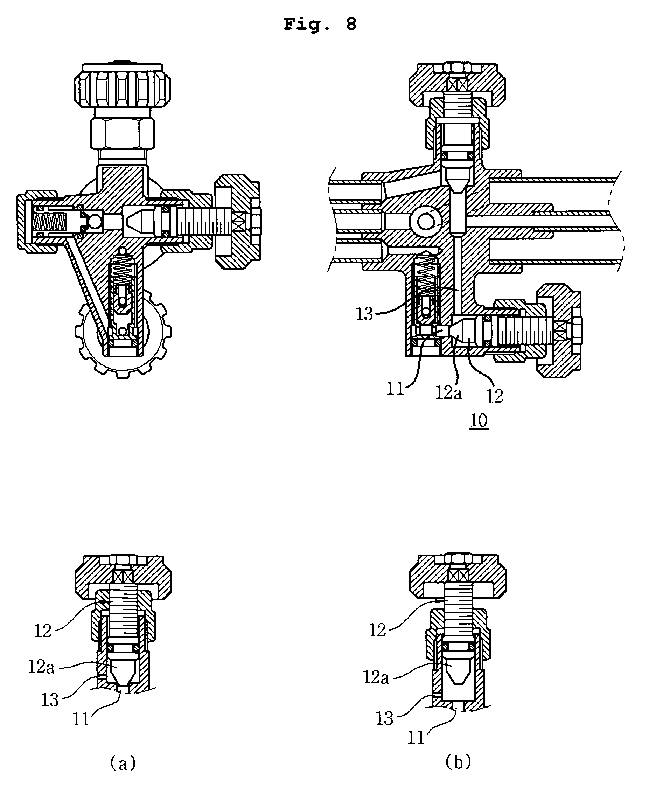

The FIG. 8 is schematic sectional view showing a gas regulating valve for torch. The gas regulating valve (10) by conventional technique is comprised of a valve frame (15) formed with a gas inlet (11) and a gas outlet (13) and a valve pin (12) turning said gas inlet (11) on/off. When the gas regulating valve (12) blocking the gas inlet (11) through the rotation of the valve pin (12) against the gas inlet (11) and undoing the gas inlet (11) by the inverse rotation of the valve pin (12) is opened and closed frequently, severe gas spilling and leaking problem would occur in the gas inlet because the contact surface of the gas inlet (11) and the head part (12a) of valve pin (12) is easily get wore and tear.

### Detailed Description

### Technical tasks

Hence, the present invention is devised to solve the conventional problems and it is an object of the present invention to provide the gas regulating valve for torch that effectively controls the gas spilling and the leaking problem.

### Means of problem solving

To accomplish the above object, according to the desirable first examples, it is provided that a gas regulating valve for torch comprising, a valve frame formed with a gas inlet with tapered cross section and a gas outlet, a valve pin inserted into an insert hole of the inner part of said valve frame and turns said gas inlet on/off, a knob parts fixed in the tail part of said valve pin, a valve frame connecting part having a ring-shaped structure and formed along the outer surface of said valve pin of said knob part and fixed with the outer surface of said valve frame, said valve connecting part guiding movement of the valve pin forwardly and backwardly for said gas inlet through the rotation of said knob part and a buffer resin part cone-shapedly fixed on the head part of said valve pin, and having a tapered cross section corresponding to the tapered cross section of said gas inlet and areally contacting with the tapered surface of said gas inlet.

Preferably, the upper part of the inner surface of said valve frame connecting part is fixed to the outer surface of said valve frame, and the lower part of the inner surface of said valve frame is screw-coupled to the middle of the outer surface of said valve pin to guide movement of said valve pin through the rotation of said knob part.

Preferably, O-ring is provided in the head part of said valve pin.

Preferably, a pan-type metal piece is inserted and mounted between said valve frame and said valve frame connecting part.

Preferably, the head part of said valve pin is stepped with said buffer resin part in outer tapered buffer resin part.

Preferably, said buffer resin part is inserted into an insert hole formed at the upper part of said head part of said valve pin, or coated at the upper side of the head part of said valve pin formed with protrusively tapered shape.

According to the desirable second example, it is provided that a gas regulating valve for torch comprising, a valve frame formed with a gas inlet with tapered cross section and a gas outlet, a valve pin inserted into an insert hole of the inner part of said valve frame and turns said gas inlet on/off, a knob parts fixed in the tail part of said valve pin, a valve frame connecting part of which the inner surface is fixed to the outer surface of said valve frame and said valve pin penetrates through, a guide part, formed with a ring-shaped structure along the outer surface of said valve pin and of which the outer surface is screw-coupled with the inner surface of a insert hole of said valve frame, said valve connecting part guiding movement of the valve pin forwardly and backwardly for said gas inlet through the rotation of said knob part and a buffer resin part cone-shapedly fixed on the head part of said valve pin, and having a tapered cross section corresponding to the tapered cross section of said gas inlet and areally contacting with the tapered surface of said gas inlet.

Preferably, O-ring is provided in said valve pin between said guide part and said valve frame connecting part.

Preferably, a pan-type metal piece is inserted and mounted between said valve frame and said valve frame connecting part.

Preferably, the head part of said valve pin is stepped with said buffer resin part in outer tapered buffer resin part.

Preferably, said buffer resin part is inserted into an insert hole formed at the upper part of the head part of said valve pin, or coated at the upper side of the head part of said valve pin formed with protrusively tapered shape.

According to the desirable third example, it is provided that a gas regulating valve for torch comprising, a valve frame formed with a gas inlet and a gas outlet, a valve pin inserted into an insert hole of the inner part of said valve frame and turns said gas inlet on/off, a knob parts fixed in the tail part of said valve pin, a valve frame connecting part having a ring-shaped structure and formed along the outer surface of said valve pin of said knob part and fixed with the outer surface of said valve frame, said valve connecting part guiding movement of the valve pin forwardly and backwardly for said gas inlet through the rotation of said knob part and a buffer resin part flat-ring-shapedly inserted into the end part of said valve pin, and contacting with the wall surface of the gas inlet side of said insert hole

Preferably, a ring-shape protrusion is formed on the wall surface of the gas inlet side of said insert hole.

Preferably, the upper part of the inner surface of said valve frame connecting part is fixed to the outer surface of said valve frame, and the lower part of the inner surface of said valve frame is screw-coupled to the middle of the outer surface of said valve pin to guide movement of said valve pin through the rotation of said knob part.

Preferably, an O-ring is provided in the head part of said valve pin.

Preferably, a pan-type metal piece is inserted and mounted between said valve frame and said valve frame connecting part.

According to the desirable fourth example, it is provided that a gas regulating valve for torch comprising, a valve frame formed with a gas inlet and a gas outlet, a valve pin inserted into an insert hole of the inner part of said valve frame and turns said gas inlet on/off, a knob parts fixed in the tail part of said valve pin, a valve frame connecting part having a ring-shaped structure and formed along the outer surface of said valve pin of said knob part and fixed with the outer surface of said valve frame, said valve connecting part guiding movement of the valve pin for said gas inlet through the rotation of said knob part and a buffer resin part formed on one side of said gas inlet contacting with the head part of said valve pin having a cone-shaped part and a cylindrical part and having cone-shaped hole corresponding to the cone-shaped part of the head part of said valve pin and areally contacting with the head part of said valve pin to open and close said gas inlet, wherein the one part of the inner surface of said valve frame connecting part is fixed to the outer surface of said valve frame, and the other part of the inner surface of said valve frame is screw-coupled to the middle of the outer surface of said valve pin to guide movement of said valve pin through the rotation of said knob part.

Preferably, the diameter of the cylindrical part of the head part of said valve pin is relatively longer than that of the longest diameter of the cone-shaped part and the cylindrical part and the cone-shaped part are stepped with each other.

Preferably, an O-ring is provided in the head part of said valve pin.

Preferably, a pan-type metal piece is inserted and mounted between said valve frame and said valve frame connecting part.

According to the desirable fifth example, it is provided that a gas regulating valve for torch comprising, a valve frame formed with a gas inlet with tapered cross section and a gas outlet, a valve pin inserted into an insert hole of the inner part of said valve frame and turns said gas inlet on/off, a knob parts fixed in the tail part of said valve pin, a valve frame connecting part of which the inner surface is fixed to the outer surface of said valve frame and said valve pin penetrates through, a guide part, formed with a ring-shaped structure along the outer surface of said valve pin and of which the outer surface is screw-coupled with the inner surface of a insert hole of said valve frame, said valve connecting part guiding movement of the valve pin forwardly and backwardly for said gas inlet through the rotation of said knob part and a buffer resin part formed on one side of said gas inlet contacting with the head part of said valve pin having a cone-shaped part and a cylindrical part and having cone-shaped hole corresponding to the cone-shaped part of the head part of said valve pin and areally contacting with the head part of said valve pin to open and close said gas inlet.

Preferably, the diameter of the cylindrical part of the head part of said valve pin is relatively longer than that of the longest diameter of the cone-shaped part and the cylindrical part and the cone-shaped part are stepped with each other.

Preferably, an O-ring is provided in said valve pin between said guide part and said valve frame connecting part.

Preferably, a pan-type metal piece is inserted and mounted between said valve frame and said valve frame connecting part.

### Effect of the Invention

According to this invention, as the contact face between the gas inlet and the valve is protected by the resin, the life of the gas regulating valve is increased and a gas leak between the gas inlet and the valve pin can be suppressed effectively, such that large scale explosion accidents or safety-related accidents as well as environmental contamination or environmental accidents due to a gas leak can be avoided in advance.

### Brief Description of the Drawings

Fig. 1 is a schematic sectional view of the gas regulating valve for a torch according to the first example of the present invention.

Fig. 2 is a schematic sectional view of the gas regulating valve for a torch according to the second example of the present invention.

Fig. 3 is a schematic sectional view of the gas regulating valve for a torch according to the third example of the present invention.

Fig. 4 is a sectional perspective view showing the connection of the head part of the valve pin of the gas regulating valve for a torch and the buffer resin part of the Figs. 1 to 3 schematically.

Fig. 5 is a schematic sectional view of the gas regulating valve for a torch according to the fourth example of the present invention.

Fig. 6 is a schematic sectional view of the gas regulating valve for a torch according to the fifth example of the present invention.

Fig. 7 is a sectional perspective view showing the connection of the head part of the valve pin of the gas regulating valve for a torch and the buffer resin part of the Fig. 5 and Fig. 6 schematically.

Fig. 8 is a schematic sectional view showing the gas regulating valve for a torch according to the conventional invention.

### Detailed Description of Preferred Embodiments

Reference will be now made in detail to the preferred embodiments of the present invention with reference to the attached drawings.

**Example 1:**

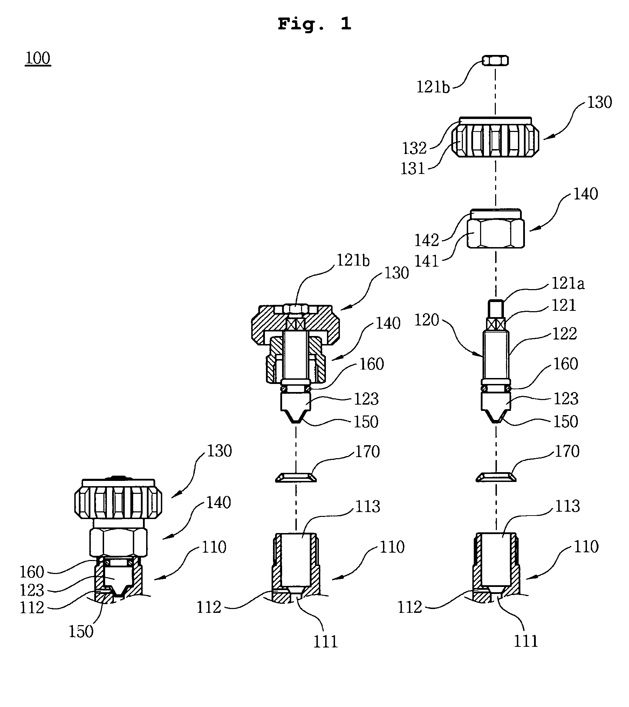

Fig. 1 is a schematic cross-sectional view of a gas regulating valve for a torch according to the first example of the present invention.

According to Fig. 1, the gas regulating valve (100) for torch in example 1 consists of a valve frame (110), a valve pin (120), a knob part (130), a valve frame connecting part (140) and a buffer resin part (150).

As shown, the valve frame (110) has a gas inlet (111) and the gas outlet (112) with an actual taper-shaped cross section. Herein, the valve frame (110) means a frame for controlling the amount of a gas such as acetylene or oxygen from the torch to a gas supply pipe (not shown), an oxygen supply pipe for cutting or a pre-heating oxygen supply pipe (not shown). The gas inlet (111) and the gas outlet (112) were illustrated according to the direction of gas, but it could widely be applied to a gas regulating valve flowing a gas from the gas outlet (112) to the gas inlet (111).

The valve pin (120) is inserted into an insert hole (113) formed on inside of the valve frame (110) and work in the forward-backward direction against the gas inlet (111) to block and undo the gas inlet (111). In other words, when the surface of the valve pin (120) contacts the taper-shaped gas inlet (111), blocks the gas inlet (111), it is able to block the gas inflow from the gas inlet (111) by blocking the gas inlet (111).

The knob part (130) is sticked to the lower end part of the valve pin (120), namely the tail part (121). For example, the knob part (130) is a top side-open cylindrical shape wherein protrusions (131) are formed in the outer surface of the cylinder in a ring-shape to facilitate a rotation and the tail part (121) and the knob part (130) of the valve pin (120) could be fastened by inserting the tail part (121) of the valve pin (120) to a bottom part (132) and joining a bolt (121a) - a nut (121b).

As shown, the valve frame connecting part (140) is formed in a ring-shape along the outer side of the valve pin (120) of the upper knob part (130) and guides the valve pin (120) by the rotation of the knob part (130) to do the forward-backward transitional motion against the gas inlet (111). In other words, the upper inner part (141) of the valve frame connecting part (140) is joined with the outer part of the valve frame (110) and the lower inner part (142) of the valve frame connecting part (142) is tightened by the screw with the outer middle part (122) of valve pin (120) and guides the valve pin (120) to do the forward-backward transitional motion by the rotation of the knob part (130) against the gas inlet (111).

The buffer resin part (150) is fixed to the upper head part (123) of the valve pin (120) in shape of corn, and has a count-cross section corresponding to the taper-shape of the gas inlet (111), and areally contacts to the taper part of the gas inlet (111).

Specifically, in case of shutting off the gas, by the rotation of the knob part (130), the taper side of the gas inlet becomes to contact the taper surface of the buffer resin part (150) by making the valve pin fixed to the knob move forwards to the gas inlet (111) according to the guidance of the valve frame connecting part (140).

Therefore, by the areal contacts of taper-section of gas inlet (111) and taper-section of the buffer resin part (150), gas spilling or the leaking problem is effectively prevented. Also, the gas inlet (111) will be sealed up not by the valve pin (120), but by the buffer resin part (150) face-to-face, so even the gas regulating valve toggled frequently, it could effectively prevent the abrasion or the damage of the taper side of the gas inlet or the contacting faces of the valve pin (120), and it also could effectively prevent the gas leaking or the spilling problem through the gas inlet (111).

On the other hand, O-ring (160) could be joined to the head part (123) of the valve pin (120). For instance, forming uneven surface of the outer head part (123) of the valve pin (120) and inserting the O-ring (160) to the uneven surface could effectively prevent the gas liking and spilling problem between the valve frame (110) and the valve pin (120) not the gas outlet (112).

Also, the head part (123) of the valve pin (120) could make the stepped cone shape with the buffer resin part (150) for the outer side of the taper-shape buffer resin part (150). For instance, as the buffer resin part (150) forms a stepped cone shape against the head part (123) of the valve pin (120), it could prevent damages of the buffer resin part (150) caused by excessive rotation of the knob part (130).

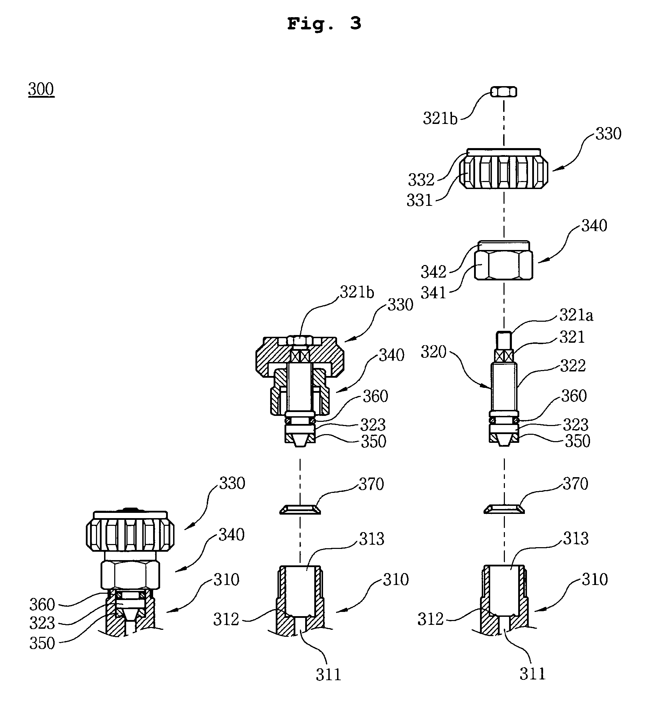

Also, the buffer resin part (150) could either be inserted into the insert hole formed in the upper head part (123) of the valve pin (120), or be coated at the upper head part (123) of valve pin (120) protruded in a form of the taper-shape. The specific connection of the head part (123) of the valve pin (120) and the buffer resin part (150) will be explained referring to Fig. 3.

In addition, the metal piece (170) could be inserted between the valve frame (110) and the valve frame connecting part (140) to prevent a shaking problem by separation in assembling the valve frame (110) with valve pin (120) or valve frame connecting part (140).

It is advisable for the metal piece (170) to be formed in a pan-type to stably sustain the valve pin (120). If the metal piece (170) is formed in a pan-type, it presses and restrains the valve pin (120) at the time of assembling because the external diameter is stretched and the internal diameter is narrowed.

**Implementation Example 2:**

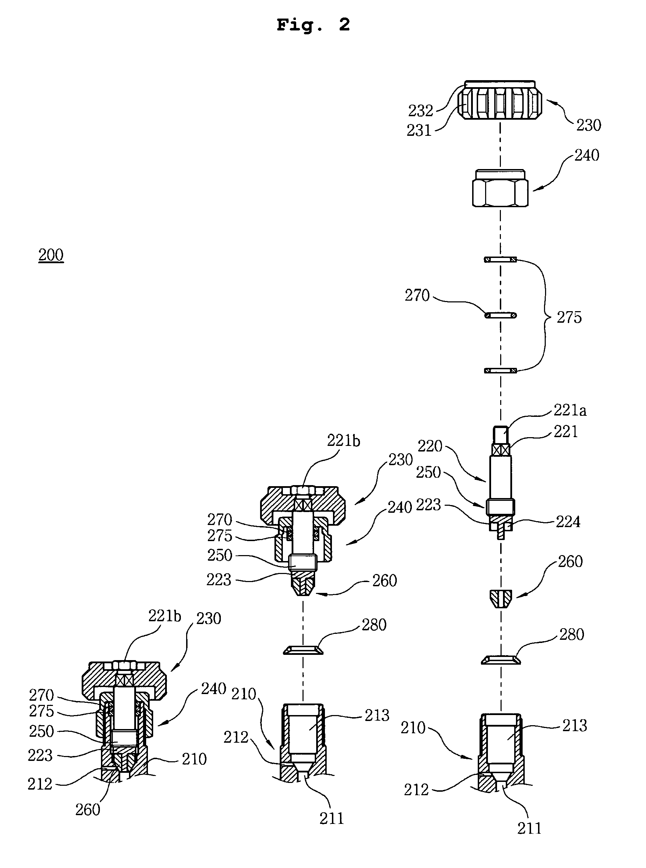

Fig. 2 is a schematic cross-section view of a gas regulating valve for a torch according to the second example. Herein, overlapping explanation regarding Fig. 1 will be skipped.

According to Fig. 2, the gas regulating valve (200) for a torch in other examples consists of a valve frame (210), a valve pin (220), a knob part (230), a valve frame connecting part (240), a guide part (250) and a buffer resin part (260).

The valve frame (210) is formed with the substantial gas inlet (221) and the gas outlet (212) with the taper-shape cross-section.

The valve pin (220) is inserted into an insert hole (213) formed on inside of the valve frame (210) and work in the forward-backward direction against the gas inlet (211) to block and undo the gas inlet (211). In other words, when the surface of the valve pin (220) contacts the taper-shaped gas inlet (211), blocks the gas inlet (211), it is able to block the gas inflow from the gas inlet (211) by blocking the gas inlet (211).

The knob part (230) is sticked to the lower end part of the valve pin (220), namely the tail part (221). For example, the knob part (230) is a top side-open cylindrical shape wherein protrusions (231) are formed in the outer surface of the cylinder in a ring-shape to facilitate a rotation and the tail part (221) and the knob part (230) of the valve pin (220) could be fastened by inserting the tail part (221) of the valve pin (220) to a bottom part (232) and joining a bolt (221a) - a nut (221b).

The inner part of the valve frame connecting part (240) is fixed with the outer part of the valve frame (210) in formed of a ring-shape and valve pin (220) gets through it.

The guide part (250) is formed as a ring-shape along the outer part, and the outer part is connecting with the insert hole (213) of the valve frame (210) tightened by the screw, guides the valve pin (220) to do the forward-backward transitional motion by the rotation of the knob part (230) against the gas inlet (211).

The buffer resin part (260) is fixed to the upper head part (223) of the valve pin (220) in shape of corn, and has a count-cross section corresponding to the taper-shape of the gas inlet (211), and areally contacts to the taper part of the gas inlet (211).

Specifically, in case of shutting off the gas, by the rotation of the knob part (230), the taper side of the gas inlet becomes to contact the taper surface of the buffer resin part (260) by making the valve pin fixed to the knob move forwards to the gas inlet (211) according to the guidance of the valve frame connecting part (240).

Therefore, by the areal contacts of taper-section of gas inlet (211) and taper-section of the buffer resin part (260), gas spilling or the leaking problem is effectively prevented. Also, the gas inlet (211) will be sealed up not by the valve pin (220), but by the buffer resin part (260) face-to-face, so even the gas regulating valve toggled frequently, it could effectively prevent the abrasion or the damage of the taper side of the gas inlet or the contacting faces of the valve pin (220), and it also could effectively prevent the gas leaking or the spilling problem through the gas inlet (211).

On the other hand, O-ring (270) could be joined to the valve pin (220) which is between the guide part (250) and the valve frame connecting part (240). For instance, inserting a pair of washer (275) to the valve pin (220) and inserting O-ring (270) between a pair of washer (275) could effectively prevent the gas liking and spilling problem through the valve frame (240) and the valve pin (220) not the gas outlet (212).

Also, the head part (223) of the valve pin (220) could make the stepped cone shape with the buffer resin part (260) for the outer side of the taper-shape buffer resin part (150). For instance, As the buffer resin part (260) forms a stepped cone shape against the head part (123) of the valve pin (220), it could prevent damages of the buffer resin part (260) caused by excessive rotation of the knob part (230).

Also, the buffer resin part (260) could either be inserted into the insert hole formed in the upper head part (223) of the valve pin (220), or be coated at the upper head part (223) of valve pin (220) protruded in a form of the taper-shape. The specific connection of the head part (223) of the valve pin (220) and the buffer resin part (150) will be explained referring to Fig. 3.

In addition, the metal piece (280) could be inserted between the valve frame (210) and the valve frame connecting part (240) to prevent a shaking problem by separation in assembling the valve frame (210) with valve pin (220) or valve frame connecting part (240).

It is advisable for the metal piece (280) to be formed in a pan-type to stably sustain the valve pin (220). If the metal piece (280) is formed in a pan-type, it presses and restrains the valve pin (220) at the time of assembling because the external diameter is stretched and the internal diameter is narrowed.

**Example 3:**

Fig. 3 is a schematic cross-section view of a gas regulating valve for a torch according to the second example. Herein, overlapping explanation regarding Fig. 1 or Fig. 2 will be skipped.

As shown, the valve frame (310) has a gas inlet (311) and the gas outlet (not shown). Herein, the valve frame (310) means a frame for controlling the amount of a gas such as acetylene or oxygen from the torch to a gas supply pipe (not shown), an oxygen supply pipe (not shown) for cutting or a pre-heating oxygen supply pipe (not shown). The gas inlet (311) and the gas outlet (not shown) were illustrated according to the direction of gas, but it could widely be applied to a gas regulating valve flowing a gas from the gas outlet to the gas inlet (311).

The valve pin (320) is inserted into an insert hole (313) formed on inside of the valve frame (310) and work in the forward-backward direction against the gas inlet (311) to block and undo the gas inlet (311).

If the buffer resin part (350) fixed in the cutting part of the valve pin (320) contacts to the surface of a wall of the gas inlet (311) of the insert hole (311), it prevents a gas inflow from the gas inlet (311) by blocking the gas inlet (311).

A side surface of the wall of the gas inlet (311) of above insert hole (313) shows a ring-shape protrusion (312) developing sealing power, and one ring-shape protrusion (312) is formed in this example but it is also possible to form multiple ring-shape protrusions.

The knob part (330) is sticked to the lower end part of the valve pin (320), namely the tail part (321). For example, the knob part (330) is a top side-open cylindrical shape wherein protrusions (331) are formed in the outer surface of the insert hole in a ring-shape to facilitate a rotation and the tail part (321) and the knob part (330) of the valve pin (320) could be fastened by inserting the tail part (321) of the valve pin (320) to a bottom part (332) and joining a bolt (321a) - a nut (321b).

As shown, the valve frame connecting part (340) is formed in a ring-shape along the outer side of the valve pin (320) of the upper knob part (330) and guides the valve pin (320) by the rotation of the knob part (330) to do the forward-backward transitional motion against the gas inlet (311). In other words, the upper inner part (341) of the valve frame connecting part (340) is joined with the outer part of the valve frame (310) and the lower inner part (340) of the valve frame connecting part (342) is tightened by the screw with the outer middle part (322) of valve pin (320) and guides the valve pin (320) to do the forward-backward transitional motion by the rotation of the knob part (330) against the gas inlet (311).

If the buffer resin part (350) inserted to the cutting surface of the valve pin (320) contacts to a surface of the wall of the gas inlet (311) of the insert hole (313) inserted and fixed to a surface of the wall of valve pin (320), it prevents a gas inflow from the gas inlet (311) by blocking the gas inlet (311).

A surface of the wall of the gas inlet (311) of above insert cylinder (313) shows a ring-shape protrusion (312) developing sealing power, and one ring-shape protrusion (312) is formed in this example but it is also possible to form multiple ring-shape protrusions.

Specifically, in case of shutting off the gas, by the rotation of the knob part (330), the ring-shape protrusion (312) formed the surface of wall of the gas inlet (311) of the insert hole (313) becomes to contact the buffer resin part (350) by making the valve pin fixed to the knob move forwards to the gas inlet (311) according to the guidance of the valve frame connecting part (340).

Therefore, the ring-shape protrusion (312) formed in a surface of the wall of the gas inlet (311) and the buffer resin part (350) is being sealed up together, gas spilling or the leaking problem is effectively prevented. Also, the gas inlet (311) will be sealed up not by the valve pin (320), but by the buffer resin part (350) face-to-face, so even the gas regulating valve toggled frequently, it could effectively prevent the abrasion or the damage such as metal, and it also could effectively prevent the gas leaking or the spilling problem through the gas inlet (311).

On the other hand, O-ring (360) could be joined to the head part (323) of the valve pin (320). For instance, forming uneven surface of the outer head part (323) of the valve pin (320) and inserting the O-ring (360) to the uneven surface could effectively prevent the gas liking and spilling problem between the valve frame (310) and the valve pin (320) not the gas outlet (312).

In addition, the metal piece (370) could be inserted between the valve frame (310) and the valve frame connecting part (340) to prevent a shaking problem by separation in assembling the valve frame (310) with valve pin (320) or valve frame connecting part (340).

It is advisable for the metal piece (370) to be formed in a pan-type to stably sustain the valve pin (320). If the metal piece is formed in a pan-type, it presses and restrains the valve pin (320) at the time of assembling because the external diameter is stretched and the internal diameter is narrowed.

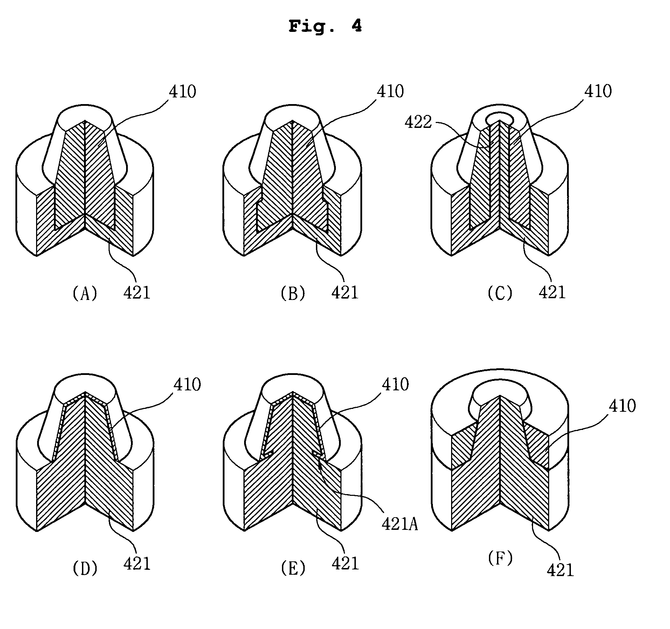

Fig. 4 is a schematic cross-section view showing the contacting relations between the head part of the valve pin of the gas regulating valve for torch and the buffer resin part of the Fig. 1 to 3.

Referring to Fig. 4, the buffer resin part (410) could be inserted to the insert hole formed in upper head part (421) of the valve pin (A, B, C). In other words, the buffer resin part (410) could just be inserted (A), or the stepped cone buffer resin part could be jointed and inserted to the insert hole formed in stepped cone shape (B), or the buffer resin part (410) could be jointed and inserted to the insert pin (422) protruded from the head part (421) in the middle of the insert hole.

The buffer resin part (410) could also be coated on the upper head part (421) of valve pin protruded in a taper-shape (D, E). Either the buffer resin part (410) could be coated (D) on the upper head part (421) of valve pin, or coated on the upper head part (421), forming uneven (421a) surface inside of the head part of the valve pin (421), by extending the uneven surface (421a).

Also, the buffer resin part (410) is protruded in taper-shape and could be fixed in flat ring-shape toward the head part (421) of the valve pin (F).

**Example 4:**

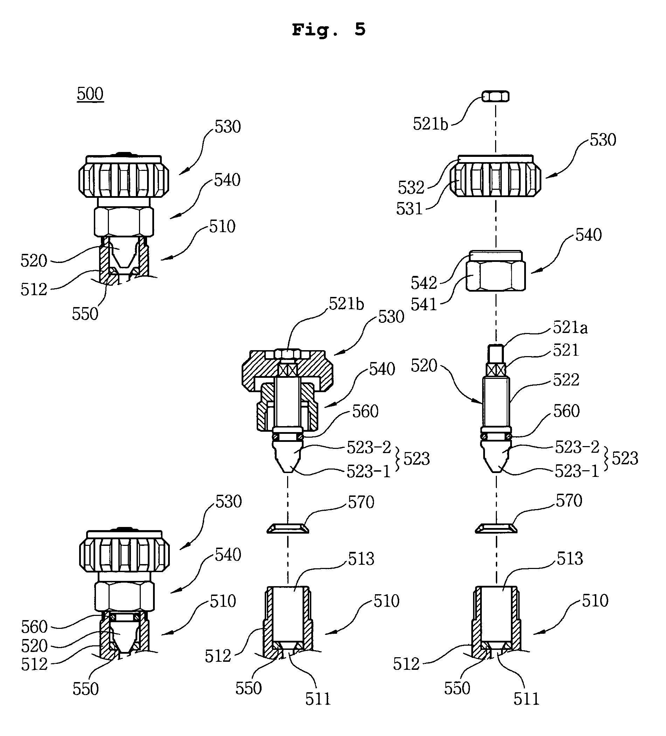

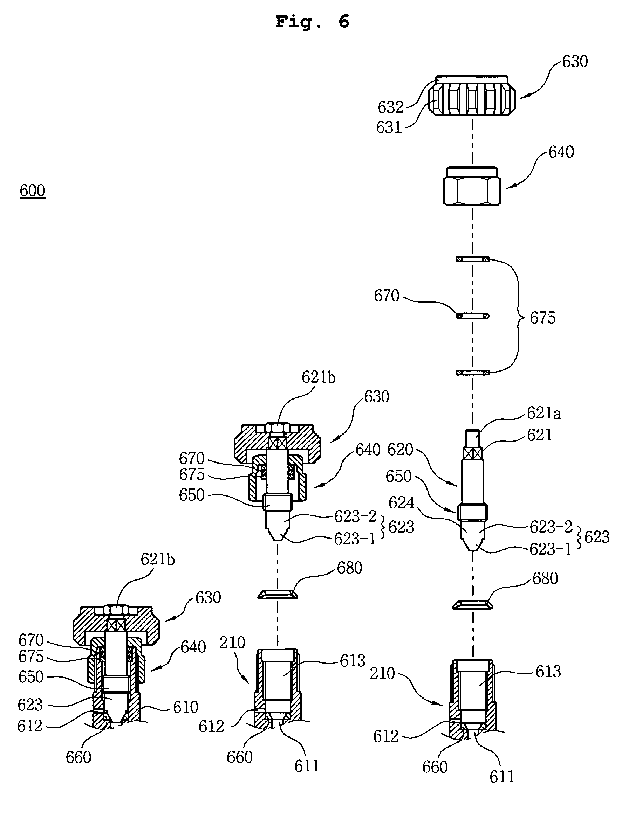

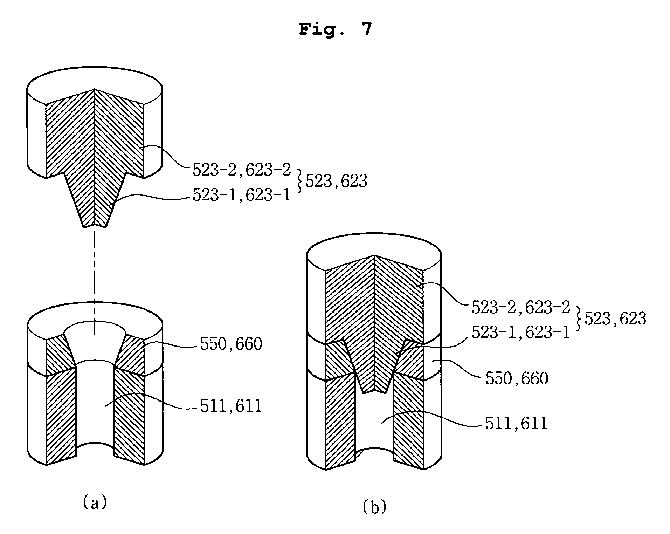

Fig. 5 is a schematic cross section view of the gas regulating valve for a torch by the fourth example and Fig. 7 is a sectional view showing the face contacting relations between the head part of the valve pin and the buffer resin part of the gas regulating valve for a torch of Fig. 5 and the Fig. 6 that will be explained below.

According to Fig. 5, the gas regulating valve (500) for a torch in example 4 consists of a valve frame (510), a valve pin (520), a knob part (530), a valve frame connecting part (540 and a buffer resin part (550).

As shown, the valve frame (510) has a gas inlet (511) and the gas outlet (512) with a prescribed-shaped gas tube. Herein, the valve frame (510) means a frame for controlling the amount of a gas such as acetylene or oxygen from the torch to a gas supply pipe (not shown), an oxygen supply pipe for cutting or a pre-heating oxygen supply pipe (not shown). The gas inlet (511) and the gas outlet (512) were illustrated according to the direction of gas, but it could widely be applied to a gas regulating valve flowing a gas from the gas outlet (512) to the gas inlet (511).

The valve pin (520) is inserted into an insert hole (513) formed on inside of the valve frame (510) and work in the forward-backward direction against the gas inlet (511) to block and undo the gas inlet (511). In other words, when the surface of the valve pin (520) contacts the gas inlet (511), blocks the gas inlet (511), it is able to block the gas inflow from the gas inlet (511) by blocking the gas inlet (511).

The knob part (530) is sticked to the lower end part of the valve pin (520), namely the tail part (521). For example, the knob part (530) is a top side-open cylindrical shape wherein protrusions (531) are formed in the outer surface of the cylinder in a ring-shape to facilitate a rotation and the tail part (521) and the knob part (530) of the valve pin (520) could be fastened by inserting the tail part (121) of the valve pin (520) to a bottom part (532) and joining a bolt (521a) - a nut (521b).

As shown, the valve frame connecting part (540) is formed in a ring-shape along the outer side of the valve pin (520) of the upper knob part (530) and guides the valve pin (520) by the rotation of the knob part (530) to do the forward-backward transitional motion against the gas inlet (511). In other words, the upper inner part (541) of the valve frame connecting part (540) is joined with the outer part of the valve frame (510) and the lower inner part (542) of the valve frame connecting part (542) is tightened by the screw with the outer middle part (522) of valve pin (520) and guides the valve pin (520) to do the forward-backward transitional motion by the rotation of the knob part (530) against the gas inlet (511).

Hence, the head part (523) of the valve pin (520) is composed of the cone-shaped part (523-1) and the cylindrical part (523-2) which has a stepped portion from the cone-shaped part (523-1) (S). Herein, the cylindrical part (523-2) of the head part (523) of the valve pin (520) is relatively bigger in diameter than the cone-shaped part (523-1), and the cone-shaped part (523-1) and cylindrical part (523-2) has the stepped portion. Substantially, the cone-shaped part (523-1) blocks and undoes the gas inlet (511).

As shown, the buffer resin part (550) is formed on the bottom side of the gas inlet (511) which areally contacts the head part (523) of the valve pin (520), and is in a form of cone-shaped ring corresponding to the cone-shaped part (523-1) of the head part (523) of the valve pin (520), and areally contacts the head part (523) of the valve pin (520) to block and undo the gas inlet (511).

Specifically, in case of shutting off the gas, by the rotation of the knob part (530), the head part (523) of valve pin (523) becomes to contact the buffer resin part (550) by making the valve pin fixed to the knob move forwards to the gas inlet (511)according to the guidance of the valve frame connecting part (540).

Therefore, by blocking the contact of the head part (523) of cone-shape part (523-1) of the valve pin (520) and the hole of cylindrical part (551) of the buffer resin part (550), gas spilling or the leaking problem by inaccurate couple or seal of the gas inlet (511) and the valve pin (520) is effectively prevented. Also, the gas inlet (511) will be sealed up not by the valve pin (520), but by the buffer resin part (550) face-by-face, so even the gas regulating valve toggled frequently, it could effectively prevent the abrasion or the damage of the taper side of the gas inlet or the contacting faces of the valve pin (520), and it also could effectively prevent the gas leaking or the spilling problem through the gas inlet (511).

On the other hand, O-ring (560) could be joined to the head part (523) of the valve pin (520). For instance, forming uneven surface of the outer head part (523) of the valve pin (520) and inserting the O-ring (560) to the uneven surface could effectively prevent the gas liking and spilling problem between the valve frame (510) and the valve pin (520) not the gas outlet (512).

Besides, according to the Fig. 7, as the cone-shape part (523-1) and the cylindrical part (523-2) of the head (523) of the valve pin (520) make stepped-cone (S), it could prevent from damages of buffer resin part (560) through the frequent rotation of the knob part (530) while contacting with buffer resin part (560). In other words, the cone-shape part (523-1) is inserted into the cone-shaped hole (511) of buffer resin part (560), and the cylindrical part (523-2) contacts with the outer surface of the buffer resin part (560). Thus, it could prevent from damages of the buffer resin part (560) by regulating frequent insertion of the cone-shaped hole (511) of the cone-shape part (523-1) through the rotation of the frequent rotation of the knob part (530).

In addition, the metal piece (570) could be inserted between the valve frame (510) and the valve frame connecting part (540) to prevent a shaking problem by separation in assembling the valve frame (510) with valve pin (520) or valve frame connecting part (540).

It is advisable for the metal piece (570) to be formed in a pan-type to stably sustain the valve pin (520). If the metal piece is formed in a pan-type, it presses and restrains the valve pin (520) at the time of assembling because the external diameter is stretched and the internal diameter is narrowed.

**Example 5:**

Fig. 6 is a schematic cross-section view of a gas regulating valve for a torch according to the firth example. Fig. 7 is a visionary picture of the cut-out view showing the schematic connection of the head part of the valve pin of the gas regulating valve for torch and the buffer resin part. Herein, overlapping explanation regarding the Fig. 5 will be skipped.

Regarding Fig. 6 and Fig. 7, the gas regulating valve (600) consists of a valve frame (610), a valve pin (620), a knob part (630), a valve frame connecting part (640), a guide part (650) and a buffer resin part (660).

The valve frame (610) has a gas inlet (611) and the gas outlet (612) with a prescribed-shaped gas tube.

The valve pin (620) is inserted into an insert hole (613) formed on inside of the valve frame (610) and work in the forward-backward direction against the gas inlet (611) to block and undo the gas inlet (611). In other words, when the surface of the valve pin (620) contacts the gas inlet (611), blocks the gas inlet (611), it is able to block the gas inflow from the gas inlet (611) by blocking the gas inlet (611).

The knob part (630) is sticked to the lower end part of the valve pin (620), namely the tail part (621). For example, the knob part (630) is a top side-open cylindrical shape wherein protrusions (631) are formed in the outer surface of the cylinder in a ring-shape to facilitate a rotation and the tail part (621) and the knob part (630) of the valve pin (620) could be fastened by inserting the tail part (621) of the valve pin (620) to a bottom part (632) and joining a bolt (621a) - a nut (621b).

The inner part of the valve frame connecting part (640) is fixed with the outer part of the valve frame (610) in formed of a ring-shape and valve pin (620) gets through it.

The guide part (650) is formed as a ring-shape along the outer part, and the outer part is connecting with the insert hole (613) of the valve frame (610) tightened by the screw, guides the valve pin (620) to do the forward-backward transitional motion by the rotation of the knob part (630) against the gas inlet (611).

Meanwhile, the head part (623) of the valve pin (620) is composed of the cone-shape part (623-1) and the cylindrical part (623-2) which is stepped (S) with the cone-shape part (623-1) and stepped-cone (S). Herein, a cylindrical part (623-2) of the head part (623) of the valve pin (620) is relatively bigger in diameter than the cone-shaped part (623-1), and the cone-shaped (623-1) and cylindrical part (623-2) shows stepped-cone. Substantially, the cone-shaped part (623-1) blocks and undoes the gas inlet (611).

As illustrated, the buffer resin part (660) is formed on the bottom side of the gas inlet (611) against the head (623) of the valve pin (620) and it a shape of corresponding to the cone-shaped part (623-1) of the head part (623) of the valve pin (620), namely the cone-shaped hole (651) shape, and blocks and undoes the gas inlet (611) by contact the surface of the head part (623) of the valve pin (620).

Specifically, in case of shutting off the gas, by the rotation of the knob part (630), the cone-shape (623-1) of head part (623) of the valve pin (620) becomes to contact the cone-shaped hole (651) of the buffer resin (660) and block the gas inlet (611) by making the valve pin fixed to the knob move forwards to the gas inlet (111)according to the guidance of the valve frame connecting part (140).

Therefore, gas spilling or the leaking problem by an inaccurate combination or sealing of the gas let (611) and the valve pin (620) is effectively prevented by blocking the contact of the cone-shape part (623-1) of head part (623) of the valve pin (620) and the cone-shaped hole (651) of the buffer resin part (660). Also, the valve pin (620) will be sealed up by the buffer resin part (660) face-to-face, so even the gas regulating valve toggled frequently, it could effectively prevent the abrasion or the damage of the gas inlet or the contacting faces of the valve pin (620), and it also could effectively prevent the gas leaking or the spilling problem through the gas inlet (611).

On the other hand, O-ring (670) could be joined to the valve pin (220) which is between the guide part (650) and the valve frame connecting part (640). For instance, inserting a pair of washer (675) to the valve pin (620) and inserting O-ring (670) between a pair of washer (675) could effectively prevent the gas liking and spilling problem through the valve frame (640) and the valve pin (620) not the gas outlet (612).

Besides, according to the Fig. 7, as the cone-shape part (623-1) and the cylindrical part (623-2) of the head (623) of the valve pin (620) make stepped-cone (S), it could prevent from damages of buffer resin part (660) through the frequent rotation of the knob part (630) while contacting with buffer resin part (660). In other words, the cone-shape part (623-1) is inserted into the cone-shaped hole (651) of buffer resin part (660), and the cylindrical part (623-2) contacts with the outer surface of the buffer resin part (660). Thus, it could prevent from damages of the buffer resin part (660) by regulating frequent insertion of the cone-shaped hole (651) of the cone-shape part (623-1) through the rotation of the frequent rotation of the knob part (630).

In addition, the metal piece (680) could be inserted between the valve frame (610) and the valve frame connecting part (640) to prevent a shaking problem by separation in assembling the valve frame (610) with valve pin (620) or valve frame connecting part (640).

It is advisable for the metal piece (680) to be formed in a pan-type to stably sustain the valve pin (620). If the metal piece (680) is formed in a pan-type, it presses and restrains the valve pin (620) at the time of assembling because the external diameter is stretched and the internal diameter is narrowed.

Meanwhile, according to the examples of the present invention, it should be known as a conventional valve which contains the whole gas supply used in torch.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

### Industrial Applicability

The gas regulating valve for a torch is able to be applied for a torch used in cutting, heating, melting, and welding of metalwork.

## Claims

1. A gas regulating valve for torch comprising:
a valve frame formed with a gas inlet with tapered cross section and a gas outlet;
a valve pin inserted into an insert hole of the inner part of said valve frame and turns said gas inlet on/off;
a knob part fixed in the tail part of said valve pin;
a valve frame connecting part having a ring-shaped structure and formed along the outer surface of said valve pin of said knob part and fixed with the outer surface of said valve frame, said valve frame connecting part guiding movement of the valve pin forwardly and backwardly for said gas inlet through the rotation of said knob part; and
a buffer resin part cone-shapedly fixed on the head part of said valve pin, and having a tapered cross section corresponding to the tapered cross section of said gas inlet and areally contacting with the tapered surface of said gas inlet.

2. The gas regulating valve for torch according to claim 1, wherein the upper part of the inner surface of said valve frame connecting part is fixed to the outer surface of said valve frame, and the lower part of the inner surface of said valve frame connecting part is screw-coupled to the middle part of the outer surface of said valve pin to guide movement of said valve pin through the rotation of said knob part.

3. The gas regulating valve for torch according to claim 2, being provided with an O-ring in the head part of said valve pin.

4. The gas regulating valve for torch according to claim 1, wherein a pan-type metal piece is inserted and mounted between said valve frame and said valve frame connecting part.

5. The gas regulating valve for torch according to claim 1, wherein the head part of said valve pin is stepped with said buffer resin part in outer tapered buffer resin part.

6. The gas regulating valve for torch according to claim 1, wherein said buffer resin part is inserted into an insert hole formed at the upper part of said head part of said valve pin, or coated at the upper side of the head part of said valve pin formed with protrusively tapered shape.

7. A gas regulating valve for torch comprising:
a valve frame formed with a gas inlet with tapered cross section and a gas outlet;
a valve pin inserted into an insert hole of the inner part of said valve frame and turns said gas inlet on/off;
a knob parts fixed in the tail part of said valve pin;
a valve frame connecting part of which the inner surface is fixed to the outer surface of said valve frame and said valve pin penetrates through;
a guide part, formed with a ring-shaped structure along the outer surface of said valve pin and of which the outer surface is screw-coupled with the inner surface of the insert hole of said valve frame, said valve frame connecting part guiding movement of the valve pin forwardly and backwardly for said gas inlet through the rotation of said knob part; and
a buffer resin part cone-shapedly fixed on the head part of said valve pin, and having a tapered cross section corresponding to the tapered cross section of said gas inlet and areally contacting with the tapered surface of said gas inlet.

8. The gas regulating valve for torch according to claim 7, being provided with an O-ring in said valve pin between said guide part and said valve frame connecting part.

9. The gas regulating valve for torch according to claim 7, wherein a pan-type metal piece is inserted and mounted between said valve frame and said valve frame connecting part.

10. The gas regulating valve for torch according to claim 7, wherein the head part of said valve pin is stepped with said buffer resin part in outer tapered buffer resin part.

11. The gas regulating valve for torch according to claim 7, wherein said buffer resin part is inserted into an insert hole formed at the upper part of the head part of said valve pin, or coated at the upper side of the head part of said valve pin formed with protrusively tapered shape.

12. A gas regulating valve for torch comprising:
a valve frame formed with a gas inlet and a gas outlet;
a valve pin inserted into an insert hole of the inner part of said valve frame and turns said gas inlet on/off;
a knob part fixed in the tail part of said valve pin;
a valve frame connecting part having a ring-shaped structure and formed along the outer surface of said valve pin of said knob part and fixed with the outer surface of said valve frame, said valve frame connecting part guiding movement of the valve pin forwardly and backwardly for said gas inlet through the rotation of said knob part; and
a buffer resin part flat-ring-shapedly inserted into the end part of said valve pin, and contacting with the wall surface of the gas inlet side of said insert hole.

13. The gas regulating valve for torch according to claim 12, wherein a ring-shape protrusion is formed on the wall surface of the gas inlet side of said insert hole.

14. The gas regulating valve for torch according to claim 12, wherein the upper part of the inner surface of said valve frame connecting part is fixed to the outer surface of said valve frame, and the lower part of the inner surface of said valve frame connecting part is screw-coupled to the middle part of the outer surface of said valve pin to guide movement of said valve pin through the rotation of said knob part.

15. The gas regulating valve for torch according to claim 12, being provided with an O-ring in the head part of said valve pin.

16. The gas regulating valve for torch according to claim 12, wherein a pan-type metal piece is inserted and mounted between said valve frame and said valve frame connecting part.

17. A gas regulating valve for torch comprising:
a valve frame formed with a gas inlet and a gas outlet;
a valve pin inserted into an insert hole of the inner part of said valve frame and turns said gas inlet on/off;
a knob part fixed in the tail part of said valve pin;
a valve frame connecting part having a ring-shaped structure and formed along the outer surface of said valve pin of said knob part and fixed with the outer surface of said valve frame, said valve frame connecting part guiding movement of the valve pin for said gas inlet through the rotation of said knob part; and
a buffer resin part formed on one side of said gas inlet contacting with the head part of said valve pin having a cone-shaped part and a cylindrical part, and having a cone-shaped hole corresponding to the cone-shaped part of the head part of said valve pin and areally contacting with the head part of said valve pin to open and close said gas inlet;
wherein the one part of the inner surface of said valve frame connecting part is fixed to the outer surface of said valve frame, and the other part of the inner surface of said valve frame connecting part is screw-coupled to the middle of the outer surface of said valve pin to guide movement of said valve pin through the rotation of said knob part.

18. The gas regulating valve for torch according to claim 17, wherein the diameter of the cylindrical part of the head part of said valve pin is relatively longer than that of the longest diameter of the cone-shaped part and the cylindrical part and the cone-shaped part are stepped with each other.

19. The gas regulating valve for torch according to claim 17, being provided with an O-ring in the head part of said valve pin.

20. The gas regulating valve for torch according to claim 17, wherein a pan-type metal piece is inserted and mounted between said valve frame and said valve frame connecting part.

21. A gas regulating valve for torch comprising:
a valve frame formed with a gas inlet with tapered cross section and a gas outlet;
a valve pin inserted into an insert hole of the inner part of said valve frame and turns said gas inlet on/off;
a knob part fixed in the tail part of said valve pin;
a valve frame connecting part of which the inner surface is fixed to the outer surface of said valve frame and said valve pin penetrates through;
a guide part, formed with a ring-shaped structure along the outer surface of said valve pin and of which the outer surface is screw-coupled with the inner surface of the insert hole of said valve frame, said valve frame connecting part guiding movement of the valve pin forwardly and backwardly for said gas inlet through the rotation of said knob part; and
a buffer resin part formed on one side of said gas inlet contacting with the head part of said valve pin having a cone-shaped part and a cylindrical part, and having a cone-shaped hole corresponding to the cone-shaped part of the head part of said valve pin and areally contacting with the head part of said valve pin to open and close said gas inlet.

22. The gas regulating valve for torch according to claim 21, wherein the diameter of the cylindrical part of the head part of said valve pin is relatively longer than that of the longest diameter of the cone-shaped part and the cylindrical part and the cone-shaped part are stepped with each other.

23. The gas regulating valve for torch according to claim 21, being provided with an O-ring in said valve pin between said guide part and said valve frame connecting part.

24. The gas regulating valve for torch according to claim 21, wherein a pan-type metal piece is inserted and mounted between said valve frame and said valve frame connecting part.
